# EUROPEAN PATENT APPLICATION

(11) **EP 4 024 077 A1**
(43) Date of publication of application: **06.07.2022**
(21) Application number: 21150055.8
(22) Date of filing: 04.01.2021
(51) Int. Cl.: G01S 7/35, G01S 13/34, G01S 13/42, G01S 13/58, G01S 13/931

(54) **METHODS AND SYSTEM FOR COMPRESSING RADAR DATA**

(71) Applicant: Aptiv Technologies Limited, St. Michael (BB)
(72) Inventor: LABUSCH, Sven, 50737 Köln (DE); KOSSACKY, Igor, 42117 Wuppertal (DE); MEUTER, Mirko, 40699 Erkrath (DE); ROESLER, Simon, 41460 Neuss (DE)
(74) Representative: Manitz Finsterwald Patent- und Rechtsanwaltspartnerschaft mbB

(57) **Abstract**

A computer implemented method for compressing radar data comprises the following steps carried out by computer hardware components: acquiring radar data comprising a plurality of Doppler bins; determining which of the plurality of Doppler bins represent stationary objects; and determining compressed radar data based on the determined Doppler bins which represent stationary objects.

## Description

### FIELD

The present disclosure relates to methods and systems for compressing radar data.

### BACKGROUND

Object detection is an essential pre-requisite for various tasks, in particular in autonomously driving vehicles.

Accordingly, there is a need to provide efficient and reliable object detection.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for detection of objects in a vicinity of a vehicle, the method comprising the following steps performed (in other words: carried out) by computer hardware components: acquiring radar data from a radar sensor; determining a radar data cube based on the radar data; providing the radar data cube to a plurality of layers (for example convolution(al) layers or inner products) of a neural network; resampling the output of the plurality of layers into a vehicle coordinate system ; and detecting an object based on the resampled output.

In other words, radar data may be acquired and may be processed in various domains, and the data in the various domains may be used for object detection.

According to another aspect, the computer implemented method further comprises the following steps carried out by the computer hardware components: fusing data from a plurality of radar sensors; and detecting the object further based on the fused data.

According to another aspect, the computer implemented method further comprises the following step carried out by the computer hardware components: acquiring camera data from a camera; wherein the object is detected further based on the camera data.

According to another aspect, the computer implemented method further comprises the following step carried out by the computer hardware components: acquiring lidar data from a lidar sensor; wherein the object is detected further based on the lidar data.

According to another aspect, the computer implemented method further comprises the following step carried out by the computer hardware components: determining an angle of arrival based on the radar data cube.

According to another aspect, wherein the angle of arrival is detected (in other words: determined) using an artificial network with a plurality of layers, for example a plurality of fully connected layers.

Using the artificial network allows an independence of the result from a calibration to the specific sensor arrangement and possible sensor misalignment.

According to another aspect, wherein the artificial neural network further comprises a dropout layer. The dropout layer may increase robustness of the processing.

According to another aspect, the object is detected further based on a regression subnet. The regression network may combine data from the camera, lidar sensor, and the various radar domains.

According to another aspect, the regression subnet comprises at least one of an u-shaped network and a LSTM.

According to another aspect, the regression subnet comprises an ego-motion compensation module. The egomotion compensation may provide that the data that is combined in the regression subnet is provided in the same coordinate system, even if data from various time steps is combined.

According to another aspect, the ego-motion compensation module carries out ego-motion compensation of an output of a recurrent network of a previous time step, and inputs the result of the ego-motion compensation into a recurrent network of present time step.

According to another aspect, the ego-motion compensation module carries out an interpolation, wherein the interpolation comprises a nearest neighbor interpolation and further comprises recording a residual part of a movement. This may avoid a drift (due to an accumulation of location errors) in the location over time.

In another aspect, the present disclosure is directed at a computer implemented method for compressing radar data, the method comprising the following steps carried out by computer hardware components: acquiring radar data comprising a plurality of Doppler bins; determining which of the plurality of Doppler bins represent stationary objects; and determining compressed radar data based on the determined Doppler bins which represent stationary objects.

The compressed radar data may be provided to later processing, for example to further layers of an artificial network. It will be understood that depending on the specific needs, the artificial neural network may be trained specifically. By providing the compressed data to the further processing, the further processing may be carried out efficiently. The further processing may include any processing as described herein.

According to another aspect, the radar data comprises a data cube or a thresholded data cube.

According to another aspect, the computer implemented method further comprises the following step carried out by the computer hardware components: determining an angle of arrival based on the radar data.

According to another aspect, the angle of arrival is determined using an artificial network with a plurality of layers.

According to another aspect, determining compressed radar data comprises: combining the determined Doppler bins which represent stationary objects into a range angle image; subtracting the range angle image from a beamvector.

According to another aspect, the compressed radar data comprises a plurality of images.

According to another aspect, the images represent at least one of an energy map or a velocity map.

According to another aspect, the compressed radar data comprises a velocity map; and the velocity map is determined based on a ramp vector.

According to another aspect, the ramp vector comprises a plurality of monotonically increasing entries.

According to another aspect, the compressed radar data comprises a velocity map and an energy map; and the energy map is determined based on the velocity map.

According to another aspect, the compressed radar data comprises at least one velocity map; and the at least one velocity map is determined based on at least one of a moving learnable Gaussian kernel or a learnable sinusoid kernel.

According to another aspect, the compressed radar data is determined further based on Doppler bins neighboring to the Doppler bins which represent stationary objects.

According to another aspect, the computer implemented method further comprises the following step carried out by the computer hardware components: determining a plurality of trained features using an encoder layer. The compressed data may comprise the trained features.

According to another aspect, the computer implemented method further comprises the following step carried out by the computer hardware components: determining a deviation map based on the velocity map. The compressed data may comprise the deviation map.

Various aspects provide a machine learning pipeline for low level sensor data (e.g. raw radar data).

The methods as described herein may create vehicle detections from neural networks.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system and the radar sensor.

In another aspect, the present disclosure is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: a structure of the RaDOR.Net according to various embodiments;
- Fig. 2: a computer system with a plurality of computer hardware components configured to carry out steps of a computer implemented method for object detection according to various embodiments;
- Fig. 3: an illustration of processing carried out for the radar data according to various embodiments;
- Fig. 4: an illustration of a multiple antenna FMCW radar arrangement according to various embodiments;
- Fig. 5: an illustration of how data cubes are determined according to various embodiments;
- Fig. 6: an illustration of input to the network according to various embodiments;
- Fig. 7: an illustration of a system overview according to various embodiments;
- Fig. 8: an illustration of layer compression according to various embodiments;
- Fig. 9: an illustration of an extension of the system shown in Fig. 8;
- Fig. 10: an illustration of another system for compressing the radar data according to various embodiments; and
- Fig. 11: a flow diagram illustrating a method for compressing radar data according to various embodiments.

### DETAILED DESCRIPTION

Radar signal processing in its core has many similarities to image processing. An FFT (fast Fourier transform) may be used to generate a range Doppler map, in which after sidelobe suppression peaks above the local noise level are identified using a variable threshold. These beam-vectors may be subsequently filtered and finally super resolution angle finding methods may be applied.

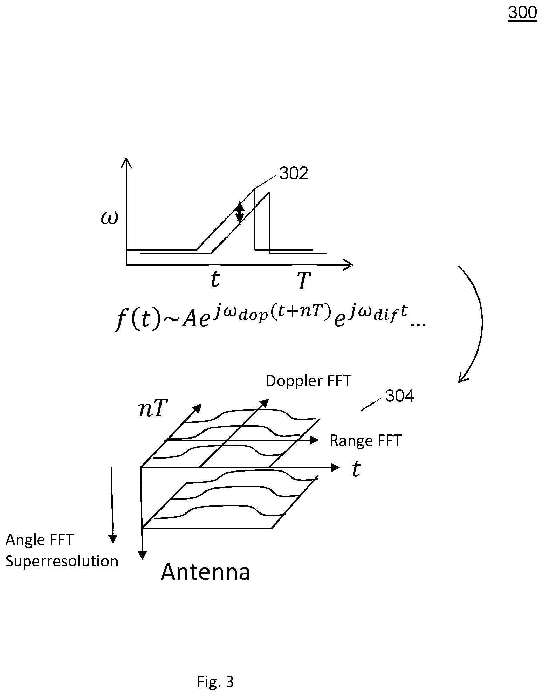

Fig. 3 shows an illustration 300 of processing carried out for the radar data, for example for a FMCW radar (frequency modulated continuous wave radar). FMCW radar is an active sensor which measures the distance from time differences between outgoing and incoming wave. An FMCW radar generates a continuous wave with alternating frequencies (in other words: a frequency ramp 302, which may be referred to as a chirp). Downmixing the transmitted and received signal yields the IF (intermediate frequency) signal. The frequencies of the fast time (duration of 1 chirp) IF signal are proportional to the target range (in other words: the distance). The phase variation along multiple chirps measured over a long time (slow time) is proportional to the relative radial Doppler shift induced by the reflectors radial movement. Thus, the received signal may be transformed into a Doppler-range diagram 304, with one plane per antenna.

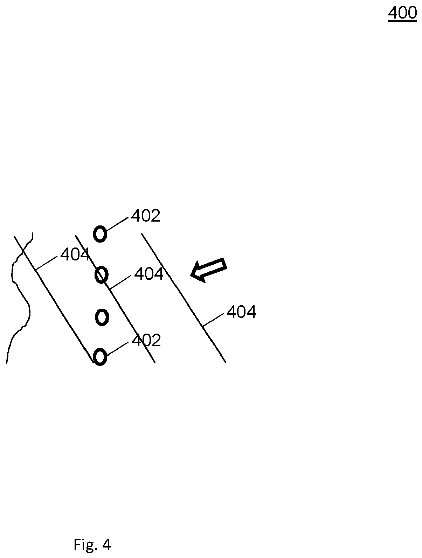

Fig. 4 shows an illustration 400 of a multiple antenna FMCW radar arrangement. A plurality of antennas 402 is illustrated. Reflected waves 404 hit the different antennas 402 with different phases. The phase shift induces a frequency over the antenna array which is proportional to the cos of the direction of arrival (DOA).

A 2D FFT (fast Fourier transform) may decompose the input signal for each antenna into frequency components and thus range and Doppler. Targets may appear as peaks in an integrated range Doppler map, and peaks above a certain energy level may be processed with FFT/DOA estimation methods and may be used to detect the direction of arrival of targets with a specific range Doppler value. The energy (rcs) may be extracted, rescaling to scale to output unit systems and looktype compensation, detection point cloud generation, and tracking and object hypothesis generation may be provided, as described in more detail herein.

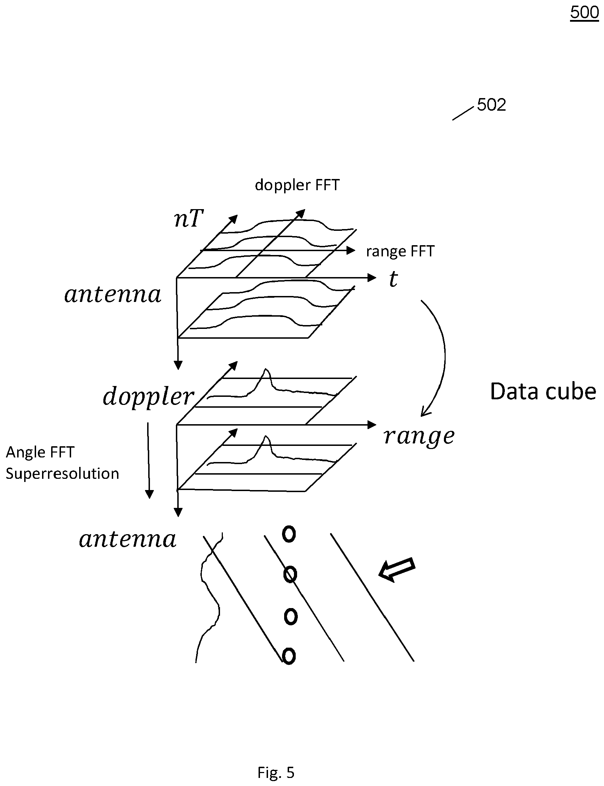

Fig. 5 shows an illustration 500 of how data cubes are determined.

Looktype compensated Doppler and range values as well as RCS (radar cross-section) values may be generated for the remaining peaks, which form a detection list. The detection list may be transformed to Cartesian coordinates and the measurements may be processed by a tracker which filters mistakes and creates temporally stable tracks from flickering detections as well as bounding boxes. Deep (artificial neural) networks may be used in image processing, language processing and other fields. Deep architectures have proven to deliver superior results to the previous hand crafted algorithm, feature engineering and classification. The question is, how to
- translate the classical form of processing to deep networks;
- how to generate bounding boxes on an environmental map;
- find the angle of beamvectors;
- give high level box hypothesis generation algorithms access to low level data;
- fuse the data of multiple radars; and
- solve the domain problem (Radar works in an RD space).

Looktypes may be provided to handle the sampling problem: The sampling of a signal needs to obey Nyquist sampling theorem, and violation of the Nyquist sampling theorem will result in ambiguities in the reconstructed signal. The problem may be resolved for the range by low pass filtering to remove frequencies higher than f_{sampling}/2. Regarding Doppler, using different resolutions for different scans (Looktypes) yields different ambiguous results, and temporal fusion methods (e.g. tracking) may then be used to resolve the ambiguities by using at least two detections of the same object. In this context, range looktypes refers to different resolutions in range so that it is also possible to get finer resolution (every n-th frame). For example, the data cube may include different resolutions, for example four different resolutions (in other words: four looktypes).

According to various embodiments, a network, which may be referred to as the RaDOR.Net - **Ra**dar **D**eep **O**bject **R**ecognition network, may be provided to solve these problems.

Various embodiments may allow for superior performance compared to traditional methods and may provide data driven performance gains.

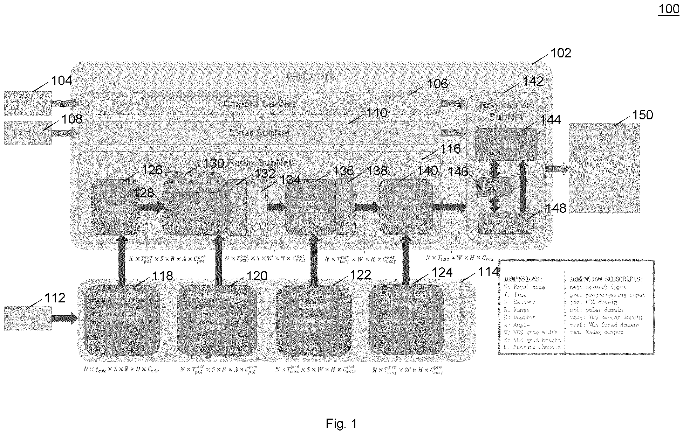

Fig. 1 shows a structure 100 of the RaDOR.Net according to various embodiments, which may allow inputs from different domains (for example a CDC domain 118, a POLAR domain 120, a VCS (vehicle coordinate system) sensor domain 122, and a VCS fused domain 124) to be used, for example in a preprocessing module 114 for pre-processing radar data 112 to a network 102. The network 102 may include a camera subnetwork 106, which may receive camera data 104, a lidar subnetwork 110, which may receive lidar data 108, and a radar subnetwork 116 which may receive data from the various domains.

In a full end2end pipeline, only input from the CDC domain 118 may be used. As an input, a 3D Compressed Data Cube (CDC) 112 may be used. This cube may be sparse as all beamvectors below CFAR (constant false alarm rate) level may be suppressed. Missing antenna elements in the beamvector may be interpolated. Calibration may be applied and the bin-values may be scaled according to the radar equation. According to various embodiments, uncompressed data cubes may be used, and a ML (machine learning) based bin suppression method may be utilized.

Data from the CDC domain 118 may be used in a CDC domain subnet 126. In the CDC domain subnet 126, on each beamvector of the range Doppler map, an angle finding network is applied. This network may be a MLP (multilayer perceptron) which may share the same parameters across all beam-vectors or more complex like described in more detail below. The CDC domain subnetwork 126 may create a range, angle, Doppler cube which may be subsequently processed with convolution layers to filter the input.

Data from the polar domain 120 may be provided to the polar domain subnet 128. In the polar domain subnet 120, the Doppler bins may be ego-motion compensated depending on the angle bins (different projections of the ego-speed).

The Doppler component may be compressed into multiple feature maps using an encoder subnetwork. A resampling layer may map different looktypes to a common representation and a coordinate conversion resampling layer may convert the feature planes from polar coordinates to a Cartesian feature plane output. In order to alleviate problems with interpolation artifacts, both conversations may be combined into one step.

The idea behind this transformation is to process further information in a feature space where object shape is invariant to translation (e.g. the same convolutions can be applied at different spatial locations in this space).

A looktype transformer 130, a polar to vehicle coordinate system transformer 132 and an ego motion transformer 134 may be provided.

Data from the VCS sensor domain 122 may be provided to the VCS sensor domain subnet 136. In the VCS sensor domain subnet 136, a max pooling may be applied to fuse the results of different radars, in order to generate feature planes combining the observation feature planes from all radars. In further embodiments, other fusion methods like gated fusion may be applied. A sensor fusion module 138 may be provided.

Data from the VCS fused domain 124 may be provided to the VCS fused domain subnet 140.

The various domain subnets 126, 128, 136, 140 may be referred to as radar subnet 116.

In a regression subnetwork 142, data from the camera subnetwork 106, the lidar subnetwork 110, and the radar subnetwork 116 may be received.

The regression subnetwork 142 may include a U-shaped network 144, a LSTM (long short-term memory) 146, and an ego-motion transformer 148, and may provide an output 150.

The U-shaped network 144 may be used to detect objects. Ego motion compensated recurrent networks like LSTMs 146 may be used to combine multiple timesteps into one result.

RaDor.Net according to various embodiments may connect data cube input from on radar or from multiple radars and object output in an end to end fashion.

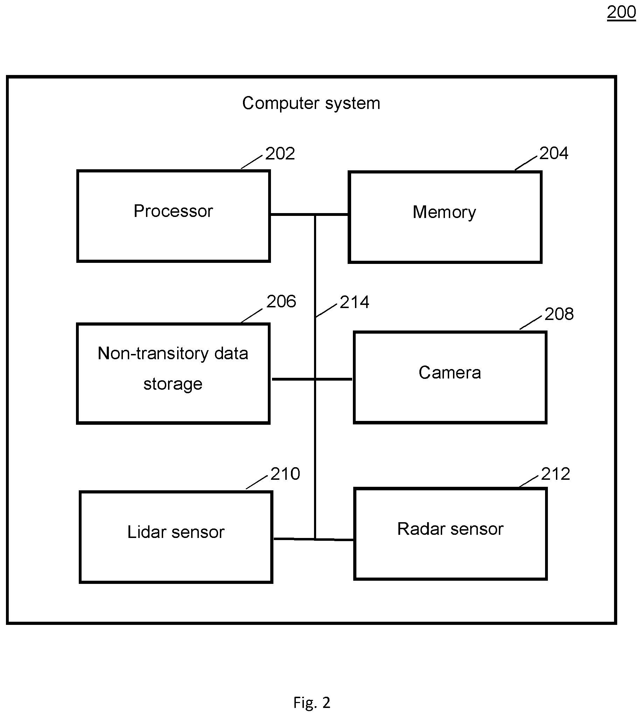

Fig. 2 shows a computer system 200 with a plurality of computer hardware components configured to carry out steps of a computer implemented method for object detection according to various embodiments and/or steps of a computer implemented method for method for compressing radar data according to various embodiments. The computer system 200 may include a processor 202, a memory 204, and a non-transitory data storage 206. At least one camera 208, at least one lidar sensor 210, and at least one radar sensor 212 may be provided as part of the computer system 200 (like illustrated in Fig. 2), or may be provided external to the computer system 200.

The processor 202 may carry out instructions provided in the memory 204. The non-transitory data storage 206 may store a computer program, including the instructions that may be transferred to the memory 204 and then executed by the processor 202.

The processor 202, the memory 204, and the non-transitory data storage 206 may be coupled with each other, e.g. via an electrical connection 214, such as e.g. a cable or a computer bus or via any other suitable electrical connection to exchange electrical signals. The at least one camera 208, the at least one lidar sensor 210, and/or the at least one radar sensor 212 may be coupled to the computer system 200, for example via an external interface, or may be provided as parts of the computer system (in other words: internal to the computer system, for example coupled via the electrical connection 214).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 200.

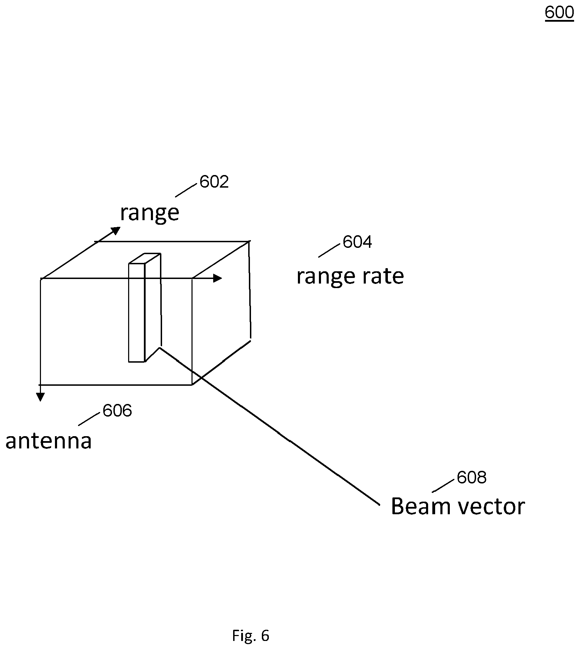

Fig. 6 shows an illustration 600 of input to the network according to various embodiments. A range direction 602, a range rate direction 604, an antenna direction 606 are illustrated. A stack of data for a fixed range and a fixed range rate, including data for various antennas, may be referred to as a beam vector 608 (which may also be referred to as a data cube). In other words, a data cube contains the complex responses of all antennas in the array.

The input data may be a data cube or a thresholded data cube (which may also be called compressed data cube or CDC). The CDC may contains only those beam vectors (and their neighborhood), where a sum over all antennas exceeds a noise threshold (for example CFAR).

According to various embodiments, an end to end differentiable CDC compression may be provided.

Radar signal preprocessing may be driven by a quick reduction of data and calculation time. Deep learning methods may be provided for data compression (in other words: reduction).

In deep learning, raw data may be connected with high level results using an appropriate architecture. Then, each layer may be trained using backpropagation, finally adapting the network parameters to generate appropriate intermediate and final results.

The embodiments described in the following may provide a modification of the Rador Net as described above and may extend Rador Net with a new front design with a data bottleneck (in other words: with data reduction or data compression). According to various embodiments, data cubes may be compressed. A framework may be provided to generate small, interpretable and visualizable intermediate layers, which are end to end differentiable, allowing to use network components before and after compression.

In the radar processing chain, a downmixed and preprocessed time domain signal is aligned as 2d signal for each antenna and then processed with a range and range rate FFTs to generate 2d planes for each antenna with complex responses for reflections for different range and range-rate bins. Then the planes are integrated into a 2d plane, a running average CFAR threshold is then used to subselect bins with sufficient energy indicating targets. Then a beamforming is used to find the direction of arrival for targets, the maxima in the range Doppler bin are used to generate detections together with additional processing steps translating bins to range and angle and generating additional data which is needed for the output. The final detections are send out. They make about -1/100000 of the original cube data. In this data bottleneck, not only a lot of data is lost, but there is also the fact, that a detection is usually defined as a representative point of energy maxima. This definition might not be in line with the needs of the later process steps. Deep learning may concept to connect low level data with high level output, optimizing different processing steps to the final needs.

According to various embodiments, data may be reduced and information may be propagated, such that it fits to the final needs. According to various embodiments, a representation mechanism is provided which is extensible, interpretable and differentiable, which is not only an interesting property for engineering, but features like differentiability are also essential for a deep learning architecture, as processing steps before the compression can be tailored towards the needs of later processing steps.

Differentiability may be provided by only using elementary mathematical operations like addition, subtraction, multiplication and division.

According to various embodiments, a first processing pipeline may be provided which has the defined properties and is efficient, so that the whole processing, may be implemented on an embedded processor not even requiring a machine learning accelerator.

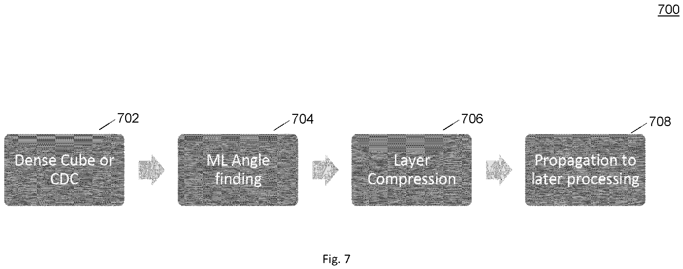

Fig. 7 shows an illustration 700 of a system overview according to various embodiments. Either a dense cube or a CDC 702 may be used as an input for the machine learning pipeline according to various embodiments. The first processing block may be an AF (angle finding) network 704, for example as described above. Then a layer compression network 706 may be used to compress the cube into a number of images. These images may represent energy or speed for different range angle cells and may be propagated to a processing in later parts 708 of the network (for example as described above with reference to Rador net).

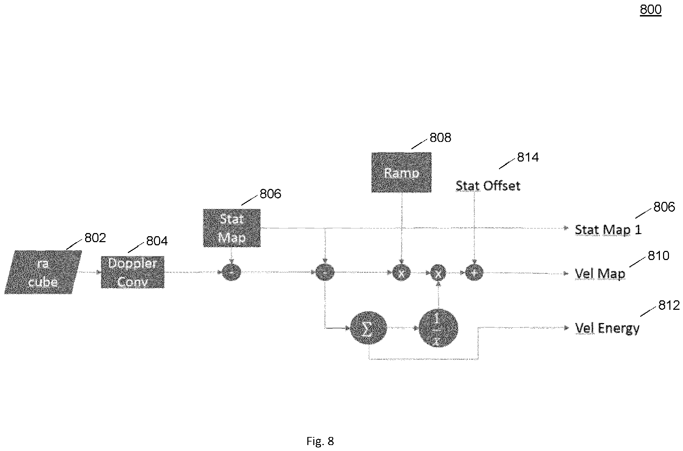

Fig. 8 shows an illustration 800 of layer compression according to various embodiments. A radar cube 802 may be provided as input.

The ra cube 802 may be a three dimensional cube with dimensions range, angle and doppler. The block 804 may represent 1D convolutions over the doppler dimension. These convolutions may be shared over all range and angle bins, so that on every range angle position the same 1D convolution over the Doppler dimension is applied. This may refine and sharpen the doppler spectrum given for each range angle bin.

First, it may be identified which Doppler bins can represent stationary objects (for example based on a stationary map 806), and these bins are then combined into a range angle image from the cube and the entry is subtracted from the beamvector.

The radar sensor may measure the range and the Doppler (or range-rate, which may be the radial speed of objects, which is the change of range over time) on each of its receiving antenna. The measured range and doppler data may be output in a discretized manner, i.e. in the form of bins. Each bin may cover the information of a defined interval.

A range angle image may be an image or a matrix which cells are indexed by range and angle. In other words, a range angle image may contain a value for each pair of range and angle indices.

A beamvector as used herein may be understood as a doppler spectrum.

The meaning of combining bins into a range angle image from the cube and subtracting the entry from the beamvector may thus be that the Doppler bins corresponding to stationary objects are subtracted or zeroed out for the calculation of the velocity map and the moving energy.

The remaining energy is summed up to generate the energy 812 for moving targets. Furthermore, a weighted multiplication with a velocity ramp vector 808 may be provided, wherein each ramp entry is weighted with the corresponding energy for the ramp value and divided by the sum of all energy entries. This entry may calculate the expectation value for the speed (for example in a velocity map 810), thus the mean Doppler speed after subtracting the stationary bins.

The stat offset block 814 is related to the ego motion compensation. According to various embodiments, instead of carrying out ego motion compensation on the ra cube 802 (which may be expensive as the cube may be big and an index shift on the doppler dimension with a different shift for each range and angle may be necessary, which may result in an expansive memory reordering)ego motion compensation may be realized by adding the range and angle dependent speed offset to the velocity map. The speed offset may be the absolute speed which a target with zero relative speed (i.e. a stationary target in relative speed) would have.

The vel energy 812 as a sum over energy may be shift independent.

In the stat map 806, the bins which represent stationary information may be identified.

Both the stat offset 814 and the stat map 806 may be defined using the ego speed and both may be range angle dependent. The stat offset 814 may consist of a speed value representing the offset between relative and absolute speed. The stat map 806 may consist of a bin index to identify which Doppler bin correspond to zero absolute speed.

It will be understood that the scheme illustrated in Fig. 8 may be complemented by additional processing steps in the front.

The scheme illustrated in Fig. 8 was tested to give a good performance in an end to end trained object detection network when it was used to replace a Doppler compression layer

The former Doppler compression layer was a set of dense layers on the doppler dimension to reduce the Doppler bins to a reduced feature size. This set of dense layers on the Doppler dimension are shared over all range angle bins.

According to various embodiments, the number of Doppler bin may be reduced to a significantly smaller feature number.

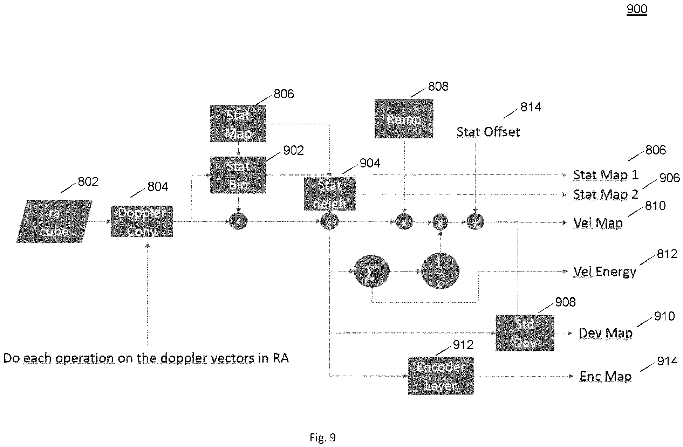

The former features were fully learned by a dense layer and are therefore not interpretable, but able to learn an abstract encoding. The maps 806, 810, 812 are interpretable, meaningful and proved to perform good, however they are human designed and fixed. According to various embodiments, in order to get the best of both worlds, the Enc map 914 may be provided as shown in Fig 9. The Enc map 914 may follow basically the same design as the former, fully learned Doppler compression to have the best of both worlds: Interpretability of meaningful human designed features and the ability to learn abstract features.

Fig. 9 shows an illustration 900 of an extension of the system shown in Fig. 8. Various components of the system with extended layer encoding shown in Fig. 9 may be similar or identical to the system shown in Fig. 8, so that the same reference signs may be used and duplicate description may be omitted.

In the system illustrated in Fig. 9, not only the stationary bin 902 is used to generate a layer, in addition, the neighboring bins 904 may be used to generate an additional layer to cover ego motion estimation inaccuracies or cover slowly moving targets. A further stationary map 906 which also includes the neighbours to static objects may be provided. Besides the mean speed value, also a speed deviation value 910 may be determined (for example by standard deviation block or network 908) to express whether there is one bin with energy or if there are multiple bins. Furthermore, end to end trained encoding layers 912 may encode information which is not covered in other layers and may provide an encoded map 914. They may allow deep networks to propagate additional feature information, which may be useful for a deep network application.

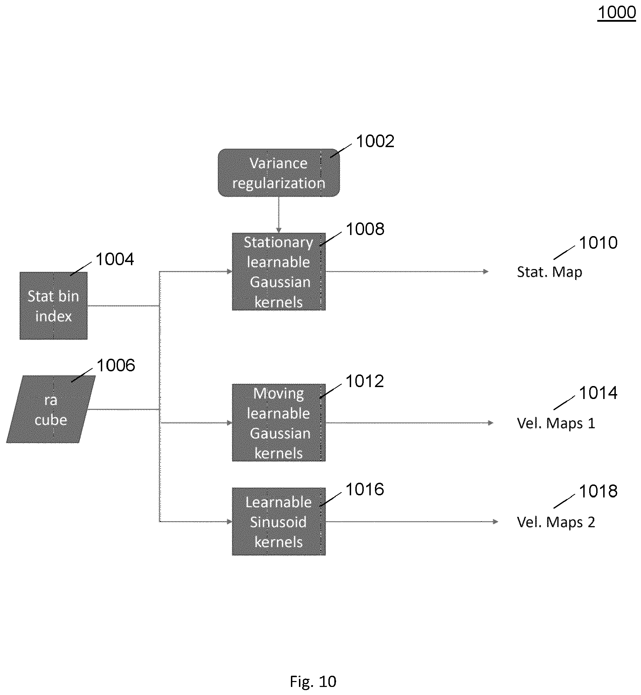

Fig. 10 shows an illustration 1100 of another system for compressing the radar data according to various embodiments. Multiple learnable Gaussian kernels 1008 may be used to compress the Doppler spectrum in the ra cube 1006. Learnable in this context may mean that three parameters (amplitude, mean and variance) of the gaussian kernel are learnable. The stationary bin index 1004 may determine which of the Doppler bins represent zero absolute speed. The means of the moving, learnable Gaussian kernels 1012 may be shifted with the value of the stationary bin index 1004 to have a unified representation of the kernels independent of the ego speed. The moving, learnable Gaussian kernels 1012 may create the first velocity maps 1014. The stationary Gaussian kernel 1008 may have just two learnable parameters because the mean may be fixed to the Doppler bin indicating zero absolute speed. Further, the variance of the stationary Gaussian kernel 1008 may be regularized, for example using variance regularization 1002. This may mean that a higher variance may be penalized more during training. The stationary learnable Gaussian kernel may create the stationary maps 1010.

Another velocity map may be created using learnable sinusoid kernels 1016. The learnable sinusoid kernels 1016 may consist of sinusoids with three learnable parameters (amplitude, frequency and phase). The stationary bin index 1004 may be used to shift the phase so that the sinusoids have a unified representation for different ego speeds as well. The learnable sinusoid kernels 1016 may create the second velocity maps 1018.

A kernel in this context may be a vector with the length of the Doppler dimension. The values of the kernel may represent either a Gaussian or a Sinusoid function defined by the learnable parameters mentioned above. For each range-angle cell in the ra cube, the inner products of the range-angle cell's Doppler dimension vector and all of the kernel vectors may be calculated. So for each kernel, one velocity map (or the stationary map) may be obtained, and in the end, there may be as many maps as there are kernels.

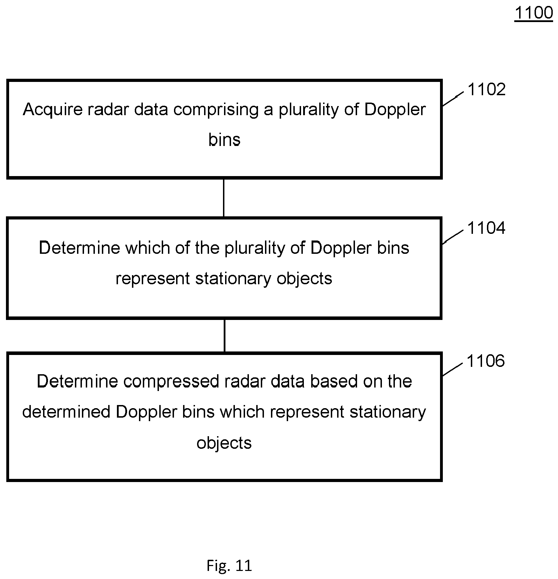

Fig. 11 shows a flow diagram 1100 illustrating a method for compressing radar data according to various embodiments. At 1102, radar data comprising a plurality of Doppler bins may be acquired. At 1104, it may be determined which of the plurality of Doppler bins represent stationary objects. At 1106, compressed radar data may be determined based on the determined Doppler bins which represent stationary objects.

According to various embodiments, the radar data may include or may be a data cube or a thresholded data cube.

According to various embodiments, the method may further include determining an angle of arrival based on the radar data.

According to various embodiments, the angle of arrival may be determined using an artificial network with a plurality of layers.

According to various embodiments, determining compressed radar data may include: combining the determined Doppler bins which represent stationary objects into a range angle image; and subtracting the range angle image from a beamvector.

According to various embodiments, the compressed radar data may include or may be a plurality of images.

According to various embodiments, the images may represent at least one of an energy map or a velocity map.

According to various embodiments, the compressed radar data may include or may be a velocity map, and the velocity map may be determined based on a ramp vector.

According to various embodiments, the ramp vector may include a plurality of monotonically increasing entries.

According to various embodiments, the compressed radar data may include or may be a velocity map and an energy map, and the energy map may be determined based on the velocity map.

According to various embodiments, the compressed radar data comprises at least one velocity map; and the at least one velocity map is determined based on at least one of a moving learnable Gaussian kernel or a learnable sinusoid kernel.

According to various embodiments, the compressed radar data may be determined further based on Doppler bins neighboring to the Doppler bins which represent stationary objects.

According to various embodiments, the method may further include determining a plurality of trained features using an encoder layer.

According to various embodiments, the method may further include determining a deviation map based on the velocity map.

Each of the steps 1102, 1104, 1106 and the further steps described above may be performed by computer hardware components, for example by a computer system 200 as illustrated in Fig. 2.

### Reference numeral list

- 100: structure of the RaDOR. Net according to various embodiments
- 102: network
- 104: camera data
- 106: camera subnetwork
- 108: lidar data
- 110: lidar subnetwork
- 112: radar data
- 114: preprocessing module
- 116: radar subnetwork
- 118: CDC domain
- 120: polar domain
- 122: VCS sensor domain
- 124: VCS fused domain
- 126: CDC domain subnet
- 128: polar domain subnet
- 130: looktype transformer
- 132: transformer Polar -> VCS
- 134: transformer ego-motion
- 136: VCS sensor domain subnet
- 138: sensor fusion module
- 140: VCS fused domain subnet
- 142: regression subnetwork
- 144: U-shaped network
- 146: LSTM
- 148: ego-motion transformer
- 150: output

- 200: computer system according to various embodiments
- 202: processor
- 204: memory
- 206: non-transitory data storage
- 208: camera
- 210: lidar sensor
- 212: radar sensor
- 214: connection

- 300: illustration of processing carried out for the radar data
- 302: frequency ramp
- 304: Doppler-range diagram

- 400: illustration of a multiple antenna FMCW radar arrangement
- 402: antennas
- 404: reflected waves

- 500: illustration of how data cubes are determined

- 600: illustration of input to the network according to various embodiments
- 602: range direction
- 604: range rate direction
- 606: antenna direction
- 608: beam vector

- 700: illustration of a system overview according to various embodiments
- 702: dense cube or CDC
- 704: AF network
- 706: layer compression network
- 708: later parts
- 800: illustration of layer compression according to various embodiments
- 802: radar cube
- 804: convolution block
- 806: stationary map
- 808: velocity ramp vector
- 810: velocity map
- 812: energy map
- 814: stat offset

- 900: illustration of an extension of the system shown in Fig. 8
- 902: stationary bin
- 904: neighboring bin
- 906: further stationary map
- 908: standard deviation network
- 910: speed deviation value
- 912: end to end trained encoding layers
- 914: encoded map

- 1000: illustration of another system for compressing the radar data according to various embodiments
- 1002: variance regularization
- 1004: stationary bin index
- 1006: ra cube
- 1008: learnable Gaussian kernels
- 1010: stationary map(s)
- 1012: moving learnable Gaussian kernels
- 1014: first velocity map(s)
- 1016: learnable sinusoid kernels
- 1018: second velocity map(s)
- 1100: flow diagram illustrating a method for compressing radar data according to various embodiments
- 1102: step of acquiring radar data comprising a plurality of Doppler bins
- 1104: step of determining which of the plurality of Doppler bins represent stationary objects
- 1106: step of determining compressed radar data based on the determined Doppler bins which represent stationary objects

## Claims

1. Computer implemented method for compressing radar data,
the method comprising the following steps carried out by computer hardware components:
- acquiring (1102) radar data comprising a plurality of Doppler bins;
- determining (1104) which of the plurality of Doppler bins represent stationary objects; and
- determining (1106) compressed radar data based on the determined Doppler bins which represent stationary objects.

2. The computer implemented method of claim 1,
wherein the radar data comprises a data cube or a thresholded data cube.

3. The computer implemented method of at least one of claims 1 to 2, further comprising the following step carried out by the computer hardware components:
determining an angle of arrival based on the radar data.

4. The computer implemented method of claim 3,
wherein the angle of arrival is determined using an artificial network with a plurality of layers.

5. The computer implemented method of at least one of claims 1 to 4,
wherein determining (1106) compressed radar data comprises:
- combining the determined Doppler bins which represent stationary objects into a range angle image;
- subtracting the range angle image from a beamvector.

6. The computer implemented method of at least one of claims 1 to 5,
wherein the compressed radar data comprises a plurality of images.

7. The computer implemented method of at least one of claims 1 to 6,
wherein the images represent at least one of an energy map or a velocity map.

8. The computer implemented method of at least one of claims 1 to 7,
wherein the compressed radar data comprises a velocity map; and
wherein the velocity map is determined based on a ramp vector;
wherein, preferably, the ramp vector comprises a plurality of monotonically increasing entries.

9. The computer implemented method of at least one of claims 1 to 8,
wherein the compressed radar data comprises a velocity map and an energy map; and
wherein the energy map is determined based on the velocity map.

10. The computer implemented method of at least one of claims 1 to 9,
wherein the compressed radar data comprises at least one velocity map;
wherein the at least one velocity map is determined based on at least one of a moving learnable Gaussian kernel or a learnable sinusoid kernel.

11. The computer implemented method of at least one of claims 1 to 10,
wherein the compressed radar data is determined further based on Doppler bins neighboring to the Doppler bins which represent stationary objects.

12. The computer implemented method of at least one of claims 1 to 11, further comprising the following steps carried out by the computer hardware components:
determining a plurality of trained features using an encoder layer; and/or
determining a deviation map based on the velocity map.

13. Computer system (200), the computer system (200) being configured to carry out the computer implemented method of at least one of claims 1 to 12.

14. Vehicle, comprising:
the computer system (200) of claim 13; and
a radar sensor configured to acquire the radar data.

15. Non-transitory computer readable medium comprising instructions for carrying out the computer implemented method of at least one of claims 1 to 12.
